# FASCICULE DE BREVET EUROPEEN

(11) **EP 1 560 003 B1**
(45) Date de publication et mention de la délivrance du brevet: **27.01.2016**
(21) Numéro de dépôt: 04100362.5
(22) Date de dépôt: 02.02.2004
(51) Int. Cl.: F02D 19/02, F17C 7/02, F17C 7/04, F02M 21/02, F17C 13/02, G01F 23/24

(54) **Système d'alimentation de gaz liquéfié pour un moteur à combustion avec détecteur de niveau minimum de gaz liquéfié**
Flüssiggas-Zufuhrsystem für eine Brennkraftmaschine mit einem Detektor für den Flüssiggas-Mindeststand
Liquefied gas feeding system for an internal combustion engine with detector of the minimum level of liquefied gas

(43) Date de publication de la demande: 03.08.2005
(73) Titulaire: LUXEMBOURG PATENT COMPANY S.A., 7440 Lintgen (LU)
(72) Inventeur: CASIER, Michael, 9044, Ettelbrück (LU)
(74) Mandataire: Lecomte, Didier

(56) Documents cités:
- EP-A- 0 088 740
- DE-A- 2 455 252
- FR-A- 2 812 247

## Description

L'invention concerne un système d'alimentation de gaz liquéfié comme carburant pour un moteur à combustion, comportant une ligne d'alimentation de gaz pour alimenter du gaz liquéfié d'une source de gaz liquéfié vers le moteur de combustion et un détecteur de niveau minimum du gaz liquéfié dans la source de gaz, en vue de produire un signal d'avertissement lorsque le niveau du gaz liquéfié dans la source de gaz liquéfié tombe en-dessous d'un niveau minimal prédéterminé,

Des nombreux véhicules industriels utilisent le gaz de pétrole liquéfié comme carburant. Le carburant est stocké sur le véhicule soit dans une bouteille changeable, soit dans un réservoir fixe. Dans le premier cas, l'utilisateur change la bouteille lorsque le carburant vient à manquer, dans le second cas, l'utilisateur doit se rendre auprès d'une station de remplissage pour remplir le réservoir.

Ces deux modes de stockage présentent chacun un inconvénient majeur :
Lorsque le carburant est stocké dans une bouteille, l'utilisateur n'a aucune information concernant le niveau de carburant restant dans la bouteille. Pour éviter la panne de carburant, l'utilisateur n'a pas d'autres alternatives que de changer régulièrement la bouteille, ce qui engendre un gaspillage important.

Lorsque le carburant est stocké dans un réservoir, ce dernier doit être rempli dans une station de remplissage. Ce remplissage est réalisé sur base du principe de pression différentielle : la pression du gaz contenu dans le réservoir de la station « pousse » la phase liquide du carburant dans le réservoir du véhicule où la pression est plus faible. Si la pression du gaz restant dans le réservoir est supérieure à la pression du gaz de la station de remplissage, le remplissage est impossible. Cela peut se produire lorsque le véhicule évolue dans une ambiance à température élevée (par exemple : réservoir exposé aux rayons de soleil).

Pour remédier à ce problème il existe dans la technique antérieure un système de détection de fin de source de carburant qui détecte la chute de pression de gaz. Ce système est placé sur la ligne d'alimentation en carburant en aval de la source de carburant et en amont du détendeur. Lorsque le carburant vient à manquer, la pression de la source de carburant chute et un pressostat déclenche l'allumage d'un témoin lumineux au tableau de bord. Ce système n'est pas fiable car la pression est directement proportionnelle à la température, l'autonomie est aléatoire est peut varier de quelques minutes à quelques secondes. Dans la majorité des cas, la lampe témoin s'allume au moment où le moteur cale faute de carburant en suffisance. Le système n'étant pas fiable, l'utilisateur ne tient pas compte de l'information affichée au tableau de bord.

D'autres constructeurs placent une seconde bouteille sur le véhicule. Cette méthode est peu pratique car le moteur du véhicule s'arrête lorsque la bouteille est vide. Si cela se produit lors d'une manoeuvre avec une charge importante, l'arrêt est brutal et cela peut présenter un certain danger. De plus, on voit que les utilisateurs n'échangent pas systématiquement la bouteille vide, la panne survient alors lorsque la seconde bouteille est vide.

Un autre système a été proposé dans FR-A-00 09 747 comportant un réservoir de réserve intercalé entre une source de gaz de pétrole liquéfié et le moteur du véhicule. Un flotteur pour détecter le niveau dans le réservoir de réserve est prévu. En position basse le flotteur actionne un contact électrique en vue d'allumer un voyant au tableau de bord du véhicule. Aussi ce système manque de fiabilité.

Il est aussi connu d'utiliser des sondes PTC disposées dans un réservoir de carburant d'un véhicule pour indiquer le niveau de gaz liquéfié dans le réservoir lors du remplissage et aussi pendant la marche du véhicule. Alors que ce système peut être approprié pour un réservoir de carburant fixe d'un véhicule il l'est moins pour une bouteille de gaz changeable parce que chaque bouteille devrait être pourvue d'une ou plusieurs sondes PTC.

L'invention a pour objectif de fournir un système d'alimentation de gaz liquéfié comme carburant pour un moteur à combustion avec: un détecteur de niveau minimum qui est fiable et ne présente pas les désavantages cités ci-avant des solutions antérieures.

L'invention a pour objet un système d'alimentation conforme à la revendication 1.

Le détecteur vient s'insérer au sein de la ligne d'alimentation en carburant. Il est placé en aval de la source de carburant et en amont du vapo-détendeur dans lequel le gaz est vaporisé par de l'eau chaude et la pression du gaz est réduite avant d'être alimenté au moteur. Le détecteur qui détecte la phase liquide ou gazeuse du carburant est plongé au coeur du flux de carburant, de préférence, directement à la sortie du réservoir (ou de la bouteille). Il s'agit d'un composant de type PTC (coefficient de température positif), élément dont la résistance électrique augmente proportionnellement avec la température.

Selon un mode de réalisation préférée, ce composant est connecté à un circuit électronique piloté par un microprocesseur. Ce dernier contrôle en permanence l'intensité du courant qui traverse la résistance électrique du composant PTC.

Le courant qui traverse le composant PTC provoque un échauffement de celui-ci. Tant que l'élément est balayé par un fluide de carburant liquide, la chaleur se dissipe instantanément et la température reste relativement basse. Lorsque le flux devient gazeux, les calories ne sont plus absorbés par le flux, la température du composant augmente, ce qui engendre une variation de sa résistance électrique. Cette variation est détectée immédiatement par le microprocesseur qui déclenche l'allumage d'un voyant ou d'un signal sonore au tableau de bord du véhicule. Tant que le réservoir (la bouteille) contient un volume suffisant de carburant en phase liquide, le voyant au tableau de bord reste éteint ou le signal sonore n'est pas déclenché.

Dans le cas du fonctionnement avec du carburant en bouteille, l'utilisateur devra procéder au remplacement de celle-ci dans un délai inférieur à l'autonomie permise avec le carburant restant dans la bouteille.

Dans le cas du stockage dans un réservoir fixe, l'utilisateur sera également averti lorsque le niveau minimum du carburant liquide est atteint. En plus, le système peut comporter dans ce cas un moyen de détection de la pression dans le réservoir et le circuit électrique peut comporter un moyen pour produire un signal visuel où sonore au tableau de bord du véhicule lorsque la pression dans le réservoir a diminué jusqu'à une valeur permettant le remplissage du réservoir. Cela évitera à l'utilisateur de se rendre à la station de remplissage avec un réservoir sous pression élevée, en effet, le remplissage n'est possible que si la pression dans le réservoir est inférieure à la pression de remplissage générée par la pompe de la station, comme cité ci-avant.

Le détecteur de niveau minimum de carburant, selon l'invention, a les avantages suivants :
1. Indépendance de la température ambiante ;
2. Autonomie suffisante pour terminer la manoeuvre en cours et rejoindre le centre de remplissage du réservoir ou de remplacement de la bouteille ;
3. Possibilité d'utiliser la bouteille jusqu'à la dernière goutte de carburant (gain financier important).
4. Dans le cas d'un réservoir fixe, retour au centre de remplissage seulement lorsque le remplissage est possible (donc gain de temps parce que des aller-retours inutiles sont évités).

L'invention sera maintenant expliquée en plus grand détail en référence aux dessins annexés sur lesquels :
Les figures 1 et 2 montrent le principe de fonctionnement du système selon la présente invention.
La figure 3 montre le dispositif de détection avec le composant PTC en coupe verticale.
La figure 4 est un schéma du circuit électronique suivant un premier mode de réalisation.
La figure 5 est un schéma du circuit électronique suivant un second mode de réalisation.

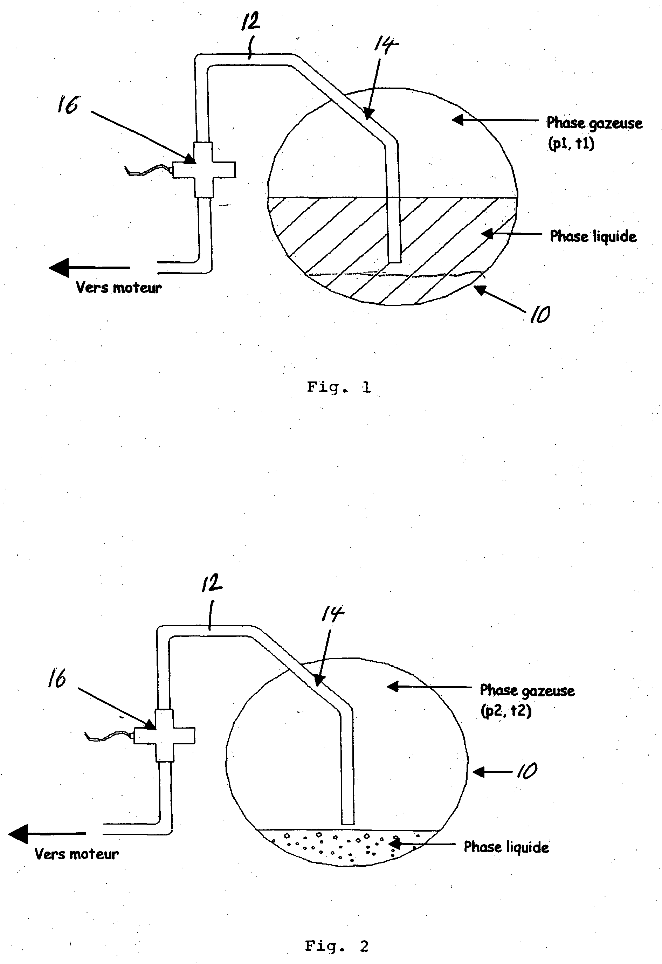

Le principe de fonctionnement sera maintenant expliqué en plus grand détail en référence aux figures 1 et 2.

Le système d'alimentation en carburant avec détecteur de niveau minimum de carburant comporte une source de carburant 10, par exemple un réservoir ou une bouteille de gaz liquéfié. Une ligne d'alimentation 12 s'étend de la source de carburant 10 vers le moteur (non-représenté). Un tube plongeur 14 faisant partie de la ligne d'alimentation 12 est fixé sur le robinet de service (non-représenté) de la bouteille ou du réservoir et permet d'amener le carburant de la bouteille ou du réservoir vers un détendeur (non-représenté). Un dispositif de détection 16 pourvu d'un composant où d'une sonde PTC est situé dans la ligne d'alimentation, de préférence en sortie de la bouteille ou du réservoir fixe en amont du détendeur (non-représenté).

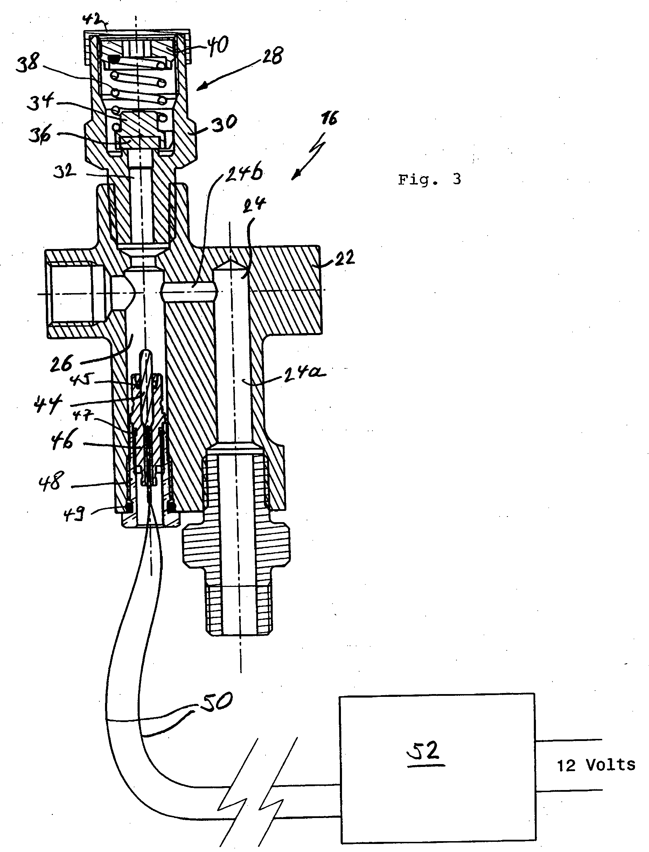

Dans la figure 1 l'extrémité inférieure du tube plongeur 14 se trouve dans le gaz liquéfié. La phase gazeuse est à la pression p1 et à la température t1 dépendant de la température ambiante. La pression pousse le liquide dans le tube plongeur 14 et remplit le conduit 12 jusqu'au détendeur (non-représenté). La sonde PTC (figure 3) du dispositif de détection 16 du changement de la phase (liquide ou gazeuse) du carburant inséré dans la ligne d'alimentation 12 est balayée par le carburant sous forme liquide.

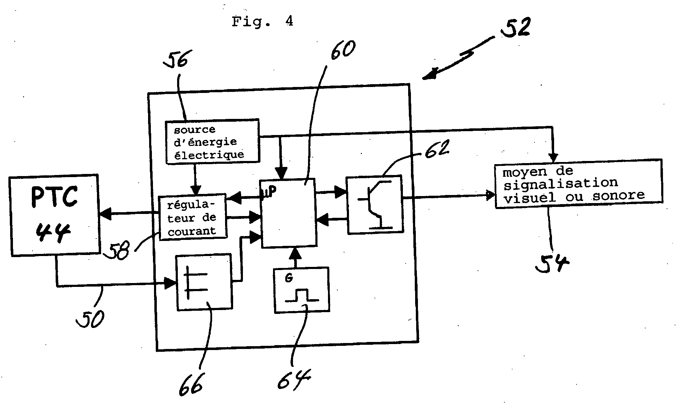

Lorsque le niveau de liquide a atteint un niveau inférieur à l'extrémité du tube plongeur 14, comme représenté sur la figure 2, la ligne d'alimentation 12 va se vider de la phase liquide du carburant et le flux gazeux qui balaye la sonde PTC ne sera plus suffisant pour maintenir la température de la sonde en-dessous du seuil de détection. Le microprocesseur du circuit électronique (figure 4) détecte cette élévation de température et déclenche un signal lumineux ou sonore pour avertir l'utilisateur que le véhicule fonctionne sur la phase gazeuse du carburant.

Si le carburant est stocké dans une bouteille, l'utilisateur se rendra alors au lieu de stockage pour procéder au remplacement de celle-ci.

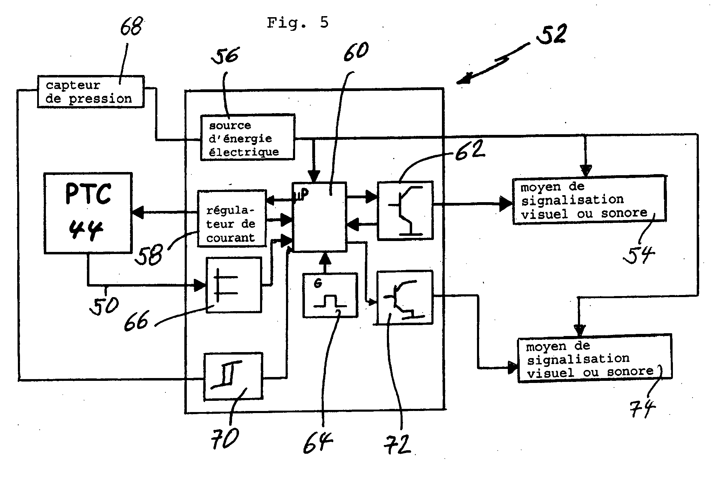

Si le carburant est stocké dans un réservoir fixe, l'utilisateur doit continuer à utiliser le véhicule. La pression de gaz dans le réservoir va chuter progressivement et l'utilisateur sera averti par un second signal émis par un moyen de détection de la pression (figure 5) lorsque la pression dans le réservoir a atteint le seuil permettant le remplissage.

Lorsque le niveau de liquide est inférieur à l'extrémité du tube plongeur 14, le peu de liquide qui reste va s'évaporer. Cette évaporation va faire baisser la température au sein du réservoir ce qui va accélérer la chute de pression. Comme cité ci-avant, le capteur ou le moyen de détection de pression va déclencher le second signal invitant l'utilisateur à se rendre à la station de remplissage lorsque la pression est suffisamment basse pour permettre le remplissage.

Par conséquent, quel que soit la source ou le mode de stockage du carburant (bouteille ou réservoir fixe), le système selon l'invention va avertir l'utilisateur que la panne de carburant est proche en décelant le changement de phase (liquide-gazeux) du carburant dans la ligne d'alimentation. Le carburant a un faible pouvoir comburant lorsqu'il est sous forme gazeuse, l'autonomie de fonctionnement sera de 5 à 10 minutes en fonction de la pression au sein de la bouteille (du réservoir).

La figure 3 représente un exemple du dispositif de détection 16 inséré dans la ligne d'alimentation 12. Ce dispositif de détection 16 comporte un corps 22 pourvu d'un passage de carburant 24 qui le traverse. Le passage de carburant 24 est relié de l'un côté à la partie amont de la ligne d'alimentation 12 raccordée à la source de carburant 10 et il est relié de l'autre côté à la partie aval de la ligne de carburant 12 allant vers le détendeur et le moteur (non-représentés). Le passage de carburant 24 comporte une partie verticale 24a et une partie horizontale 24b.

Un clapet de sûreté de réduction de pression 28 comportant un corps 30 pourvu d'un passage central 32 est en communication avec la partie horizontale 24b du passage de carburant 24. Le clapet de sûreté 28 est pourvu d'un disque de siège 34 portant une rondelle d'étanchéité 36. Un ressort hélicoïdal 38 pousse le disque de siège 34 vers le bas pour engager la rondelle d'étanchéité 36 avec un siège fixe du corps du clapet 28. L'autre extrémité du ressort 38 s'appuie sur un disque réglable 40 vissé dans une partie filetée du corps du clapet 28. Un capuchon 42 ferme l'extrémité supérieure du clapet de sûreté 28. Lorsque la pression dans le passage 24 traversant le dispositif 22 excède une valeur prédéterminée la rondelle d'étanchéité 36 est dégagée de son siège sous l'effet de la pression en vue de réduire la surpression.

Située dans un second passage vertical 28 communiquant avec le passage horizontal 24b est la sonde ou le capteur PTC 44. Cette sonde 44 est reçue dans un alésage central d'un corps de support 46 qui est vissé dans une vis de retenue tubulaire 48 vissée de son tour dans une partie filetée à l'extrémité inférieure du second passage vertical 28 du corps 22 du dispositif 16. Des joints d'étanchéité 45, 47, 49 sont prévus entre : (1) la sonde 44 et son support 46, (2) le support 46 et la vis de retenue 48, et (3) la vis 48 et le corps 22. La sonde 44 comporte une partie de tête élargie qui s'étend à son extrémité supérieure vers le haut au-delà du support 26 en vue d'être balayée par le carburant s'écoulant de la source de carburant vers le moteur. A son extrémité inférieure la sonde PTC 44 est pourvue d'une tige amincie reliée par des conducteurs électriques 50 au circuit électronique 52. Le circuit électronique 52 contrôle l'intensité du courant qui traverse la sonde PTC 44 et détecte une variation de la résistance électrique de l'élément PTC causée par une augmentation de sa température lorsqu'elle n'est plus balayée par un flux de carburant liquide. La détection de la variation de la résistance électrique de la sonde PTC 44 cause immédiatement l'allumage d'un signal visuel 54 ou le déclenchement d'un signal sonore 54 au tableau de bord du véhicule.

La figure 4 représente un exemple du circuit électronique 52 suivant un premier mode de réalisation. Le circuit électronique 52 est alimenté par la source d'énergie électrique 56 aux modules du circuit 52, comme le régulateur de courant 58, le microprocesseur 60 et le moyen de signalisation visuel ou sonore 54. Le microprocesseur 60 est opéré à une fréquence fournie par un circuit horloge 64 de façon habituelle connue dans la technique antérieure. La source d'énergie électrique 58 est en communication avec le microprocesseur 60 dans le but d'assurer un courant électrique constant à travers l'élément PTC 44, comme décrit antérieurement. La tension électrique provoquée par le passage de ce courant par l'élément PTC 44 est appliquée à un circuit détecteur 66 et capturée par celui-ci. Le circuit détecteur 66 compare le niveau de la tension à l'élément PTC 44 avec une valeur de référence, et transmet le résultat de cette opération en forme digitale au microprocesseur 60. Suivant ce résultat, le microprocesseur 60 commande un élément de sortie 62 pour déclencher un signal visuel ou sonore au moyen de signaliation 54.

Le mode de fonctionnement de ce circuit électronique 52 est comme suivant. Le régulateur de courant 58 fournit un courant constant à l'élément PTC 44, qui provoque une tension électrique aux bornes de celle-ci, qui est proportionnelle à la résistance électronique de l'élément PCT 44. Supposant que le niveau de gaz liquide est suffisant, c'est-à-dire l'élément PTC 44 est balayé par le liquide qui empêche l'échauffement de l'élément PTC 44, la résistance de cet élément est relativement faible. Quand le niveau de gaz dans la bouteille ou le réservoir diminue, l'élément PTC 44 n'est plus refroidi par le gaz liquide. Ainsi le courant constant fourni par le régulateur de courant 58 à l'élément PTC cause un échauffement de celui-ci, ce qui provoque un changement de sa résistance électrique proportionnelle à sa température. Ce changement de résistance peut être mesuré par la tension électrique détectée par le circuit détecteur 66. Quand la température atteint un niveau prédéterminé, le circuit détecteur 66 le signale au microprocesseur 60 qui déclenche le signal visuel ou sonore.

Selon la figure 5, un capteur de pression 68 a été ajouté au circuit électronique 52 suivant un mode de réalisation préféré. Ce capteur 68 est aussi alimenté par la source de courant électrique 56. La pression détectée, en forme d'une tension électrique, est transmise à un deuxième circuit détecteur 70. Le circuit détecteur 70 compare le niveau de la pression au capteur 68 à une valeur de référence, et transmet le résultat de cette opération en forme digitale au microprocesseur 60. Suivant ce résultat, le microprocesseur 60 commande un deuxième élément de sortie 72 pour déclencher un deuxième signal visuel ou sonore au moyen d'un deuxième moyen de signalisation 74.

Le mode de fonctionnement de ce circuit électronique 52 modifié est comme suivant. La source de courant électrique 56 fournit une tension constante au capteur de pression 68, qui provoque une tension électrique aux bornes de celui-ci, qui est proportionnelle à la pression dans le réservoir. Supposant que la pression dans le réservoir est relativement haute, la tension aux bornes du capteur est également relativement haute. Quand la pression dans le réservoir chute, la tension aux bornes du capteur 68 diminue également. Ainsi ce changement de pression peut être mesuré par la tension électrique détectée par le circuit détecteur 70. Quand la pression atteint un niveau prédéterminé, le circuit détecteur 70 le signale au microprocesseur 60 qui déclenche le deuxième signal visuel ou sonore.

Il est bien entendu que, même ci les exemples des modes de réalisation décrites ci-dessus se réfèrent à un circuit basé sur un microprocesseur, des fonctions équivalents pouvaient également être réalisées par des circuits analogiques.

## Revendications

1. Système d'alimentation de gaz liquéfié comme carburant pour un moteur à combustion, comportant une ligne d'alimentation de gaz (12) pour alimenter du gaz liquéfié d'une source de gaz liquéfié (10) vers le moteur à combustion, et un détecteur de niveau minimum (16) du gaz liquéfié dans la source de gaz (10), **caractérisé en ce que** le détecteur (16) est dans la ligne d'alimentation, et comporte une sonde PTC (44) plongée au coeur du flux de gaz et apte à détecter le changement de la phase liquide du gaz liquéfié à la phase gazeuse dans la ligne d'alimentation (12).

2. Système selon la revendication 1, **caractérisé en ce que** la sonde PTC (44) disposée dans la ligne d'alimentation est branchée dans un circuit électronique (52) envoyant un courant électrique par la sonde en vue de détecter une variation de sa résistance électrique suite à une augmentation de sa température après le changement de la phase liquide du gaz liquéfié à la phase gazeuse dans la ligne d'alimentation.

3. Système selon la revendication 2, **caractérisé en ce que** le circuit électronique (52) est pourvu de moyens en vue de produire un signal visuel ou sonore en réponse à la détection de la variation de la résistance électrique de la sonde (44).

4. Système selon la revendication 2 ou 3, **caractérisé en ce que** la ligne d'alimentation comporte un tube plongeur (14) s'étendant dans la source de gaz liquide (10) jusqu'à une hauteur correspondant audit niveau minimum et la sonde PTC (44) est disposée dans la ligne d'alimentation (12) à l'extérieur de la source de gaz liquéfié (10).

5. Système selon l'une quelconque des revendications 1 à 4, **caractérisé en ce que** la source de gaz liquéfié (10) est une bouteille de gaz liquéfié à remplacer par une nouvelle bouteille de gaz après la détection du changement de phase du gaz liquéfié dans la ligne d'alimentation (12).

6. Système selon l'une quelconque des revendications 1 à 4, caractérisé en ce la source de gaz liquéfié (10) est un réservoir fixe, et en ce que le système comporte en outre un moyen de détection (68) de la pression de gaz dans le réservoir, et un moyen (74) pour produire un signal visuel ou sonore lorsque la pression dans le réservoir a diminué jusqu'à une valeur permettant le remplissage du réservoir.

## Patentansprüche

1. System für die Zufuhr von Flüssiggas als Kraftstoff für einen Verbrennungsmotor, bestehend aus einer Gaszuleitung (12), um das Flüssiggas von einer Flüssiggasquelle (10) zum Verbrennungsmotor zu leiten und einem Sensor für den Mindestpegelstand (16) des Flüssiggases in der Gasquelle (10), **dadurch gekennzeichnet, dass** der Sensor (16) in der Zuleitung angeordnet ist und eine PTC-Sonde (44) beinhaltet, die in das Zentrum des Gasstroms eingetaucht ist und in der Lage ist, die Veränderung der flüssigen Phase des Gases zur gasförmigen Phase in der Zuleitung festzustellen.

2. System nach Anspruch 1, **dadurch gekennzeichnet, dass** die PTC-Sonde (44), die in der Zuleitung angeordnet ist, an einen Elektronikschaltkreis (52) angeschlossen ist, der einen elektrischen Strom von der Sonde absendet, um eine Veränderung ihres elektrischen Widerstands infolge eines Anstiegs ihrer Temperatur nach Veränderung der flüssigen Phase des Flüssiggases zur gasförmigen Phase in der Zuleitung festzustellen.

3. System nach Anspruch 2, **dadurch gekennzeichnet, dass** der Elektronikschaltkreis (52) über Mittel verfügt, um ein optisches oder akustische Signal zu erzeugen, als Reaktion auf die Feststellung der Veränderung des elektrischen Widerstands der Sonde (44).

4. System nach Anspruch 2 oder 3, **dadurch gekennzeichnet, dass** die Zuleitung ein Tauchrohr (14) beinhaltet, das in die Flüssiggasquelle (10) hineinreicht, bis zu einer Höhe, die dem genannten Mindestpegel der PTC-Sonde (44) entspricht und in der Zuleitung (12) außerhalb der Flüssiggasquelle (10) angeordnet ist.

5. System nach einem beliebigen der Ansprüche 1 bis 4, **dadurch gekennzeichnet, dass** die Flüssiggasquelle (10) eine Flasche mit Flüssiggas ist, die durch eine neue Gasflasche zu ersetzen ist, nachdem die Änderung der Phase des Flüssiggases in der Zuleitung (12) festgestellt worden ist.

6. System nach einem beliebigen der Ansprüche 1 bis 4, **dadurch gekennzeichnet, dass** die Flüssiggasquelle (10) ein fest eingebauter Tank ist und das System außerdem über ein Mittel für die Feststellung (68) des Gasdrucks im Tank und ein Mittel (74) für die Erzeugung eines optischen oder akustischen Signals verfügt, wenn der Druck im Tank bis auf einen Wert zurückgegangen ist, der das Befüllen des Tanks ermöglicht.

## Claims

1. A system for supplying liquefied gas as fuel to a combustion engine, comprising a gas supply line (12) for supplying liquefied gas from a liquefied gas source (10) to the combustion engine, and a detector (16) of a minimum level of the liquefied gas in the gas source (10), **characterized in that** the detector (16) is in the supply line and comprises a PTC probe (44) arranged in the heart of the flow of gas and is configured for detecting the occurrence of the change from the liquid phase of the liquefied gas to the gaseous phase in the supply line (12).

2. The system of claim 1 wherein the PTC probe (44) placed in the supply line is connected into an electrical circuit (52) that sends an electrical current via the probe for the purpose of detecting a variation in its electrical resistance resulting from an increase in its temperature after the change in the liquefied gas from the liquid phase to the gaseous phase in the supply line.

3. The system of claim 2, **characterized in that** the electronic circuit (52) is provided with means for producing a visual or audible signal in response to detection of the variation in the electrical resistance of the probe (44).

4. The system of claim 2 or 3, **characterized in that** the supply line includes a dip tube (14) extending in the liquid gas source (10) up to a height corresponding to the said minimum level, and the PTC probe (44) is placed in the supply line (12) outside the liquefied gas source (10).

5. The system of any one of claims 1 to 4, **characterized in that** the liquefied gas source (10) is a liquefied gas bottle which is to be replaced with a new gas bottle after the change in phase of the liquefied gas in the supply line (12) has been detected.

6. The system of any one of claims 1 to 4, **characterized in that** the liquefied gas source (10) is a fixed tank, the system further including means (68) for detecting the gas pressure in the tank and a means (74) for producing a visual or audible signal when the pressure in the tank has dropped to a value allowing the tank to be filled.
